# FASCICULE DE BREVET EUROPEEN

(11) **EP 1 087 592 B1**
(45) Date de publication et mention de la délivrance du brevet: **22.10.2003**
(21) Numéro de dépôt: 00402630.8
(22) Date de dépôt: 21.09.2000
(51) Int. Cl.: H04M 1/02

(54) **Téléphone mobile comportant une vitre amovible**
Mobiltelefon mit einer beweglicher Fensterscheibe
Mobile phone having a removable window

(30) Priorité: 22.09.1999 FR 9911821
(43) Date de publication de la demande: 28.03.2001
(73) Titulaire: SAGEM S.A., 75015 Paris (FR)
(72) Inventeur: Kerbrat, Patrick M., 95490 Vaureal (FR)
(74) Mandataire: Schmit, Christian Norbert Marie

(56) Documents cités:
- EP-A- 0 920 166
- EP-A- 0 939 533
- GB-A- 2 293 517
- US-A- 5 745 566
- US-A- 5 768 370

## Description

La présente invention a pour objet un téléphone mobile comportant une vitre amovible. Le domaine de l'invention est celui de la téléphonie mobile, mais il peut s'étendre à celui de tous les appareils comportant un écran qui doit être protégé par une vitre. Cette vitre doit alors elle-même être interchangeable. Le but de l'invention est de permettre à un utilisateur d'un téléphone mobile de changer la vitre de celui-ci lorsque cette dernière est rayée. Ce changement doit bien-sûr être possible sans que l'utilisateur soit obligé de retourner son appareil à un service de maintenance. Un autre but de l'invention est de permettre à l'utilisateur du téléphone mobile de personnaliser ce dernier. On peut en effet envisager différents modèles de vitres.

Dans l'état de la technique, pour la personnalisation, il existe des téléphones mobiles qui comportent des plastrons qui permettent de personnaliser la partie de la face avant du téléphone mobile située au niveau du clavier. L'emplacement de ce plastron inclut donc le clavier du téléphone mobile, mais pas son écran. Dans ce cas on se sert de l'élasticité du plastron pour le maintenir en position. Une erreur de manipulation, si on déforme trop le plastron pour le mettre en place ou pour le retirer peut entraîner sa rupture.

On connaît aussi un téléphone mobile sur lequel on peut changer toute la face avant. Ce changement inclut un changement de la vitre de protection de l'écran. Cependant dans ce cas le changement de la vitre de protection ne peut pas se faire sans un changement complet de la face avant. Cela représente un problème de coût. En effet une face avant complète est plus chère qu'un simple vitre. Aussi si on raye la vitre de son téléphone, et qu'on ne souhaite pas changer l'aspect de ce dernier, il faut acquérir une face avant identique à celle que l'on a rayée. Bien souvent ces faces avant ne sont disponibles que par lots, il faut donc acquérir un nouveau lot. Cela est très onéreux pour une simple rayure.

Un autre inconvénient de l'interchangeabilité de la face avant est que cela nécessite de prévoir un dispositif de protection pour l'intérieur du téléphone lorsque la face avant est retirée. On se retrouve donc avec un boîtier de téléphone qui comporte deux faces avant, une de protection et une de présentation. Ici encore on se retrouve avec un surcoût qui pourrait être évité.

Les moyens qui sont mis en oeuvre pour le maintien de la face avant interchangeable sont eux aussi sujet à caution. En effet la face avant dispose de deux crochets sur sa partie inférieure qui s'accrochent sur un axe du téléphone mobile. La face avant pivote ainsi autour de cet axe et vient se positionner sur le téléphone mobile de manière correcte. Elle est maintenue en place par un ergot qui s'engrène dans une encoche du téléphone mobile. Cet ergot est compris sur une languette qui est fixée sur la face avant. Pour changer de face avant, il suffit d'appuyer sur l'ergot pour retirer la face avant qui est en place et en mettre une autre. Cependant pour assurer un maintien correct il faut que la languette soit rigide. De plus dans la solution adoptée la languette est courte. L'effort à appliquer sur la languette n'est donc pas négligeable. Cela entraîne une usure rapide et des risques de rupture prématurée de la languette ce qui rendrait la face avant à laquelle elle appartient inutilisable.

Dans l'état de la technique on connaît des coques amovibles par les documents US-A-5 768 370, GB-A-2 293 517, US-A-5 745 566, EP-A-0 939 533, EP-A-0 920 166.

L'invention résout ces problèmes en incluant dans le téléphone mobile une vitre amovible. Le rôle de cette vitre est de protéger l'écran du téléphone mobile, mais aussi de le personnaliser en proposant plusieurs modèles de vitres.

Cette vitre recouvre donc l'écran du téléphone mobile et comporte deux languettes situées sur ses côtés latéraux. Ces languettes traversent le téléphone mobile et sont dotées d'ergots situés vers l'extérieur du téléphone mobile. Ces ergots s'accrochent sur des éléments de la coque du téléphone mobile, ce qui solidarise la coque et la vitre. De plus la vitre est maintenue en pression contre les téléphones mobiles par l'intermédiaire d'un joint élastique. Ce joint a pour rôle d'assurer l'étanchéité du téléphone mobile, entre l'écran et la vitre, mais aussi un bon maintien de la vitre.

Le dispositif de fixation de la vitre est accessible par l'arrière du téléphone mobile, lorsque la batterie de ce dernier n'est pas en place. Alors pour retirer la vitre, il suffit de pincer les deux languettes et de pousser. Lorsque la batterie est en place sur le téléphone mobile, elle maintient les deux languettes dans leur position verrouillée. Il n'y a donc pas de risque de voir la vitre s'enlever au cours d'un choc. De plus ce maintien des languettes par la batterie permet de réaliser des languettes relativement souples ce qui facilite la mise en place et l'extraction de la vitre, mais aussi allonge la durée de vie des languettes qui ne risquent pas de se briser du fait de leur rigidité excessive.

L'invention a donc pour objet un téléphone mobile comportant un boîtier muni d'une coque supérieure selon la revendication 1.

La présente invention sera mieux comprise à la lecture de la description qui suit et à l'examen des figures qui l'accompagne. Celles-ci ne sont présentées qu'à titre indicatif et nullement limitatif de l'invention. les figures montrent :
- Figure 1 : une vue en coupe d'un téléphone mobile selon l'invention, avec les languettes vues dans leur largeur.
- Figure 2 : une vue en coupe d'un téléphone selon l'invention avec les languettes vues dans leur largeur.
- Figure 3 : une illustration d'une vitre pour un téléphone selon l'invention, la vitre est alors monobloc.
- Figure 4 : une illustration d'une vitre pour un téléphone selon l'invention, la vitre est en deux parties.

Selon la description qui suit on considère que le haut du téléphone mobile et des éléments qui les constituent est situé vers le haut-parleur, le bas du téléphone mobile et des éléments qui le constituent est situé vers le microphone du téléphone mobile. De même la partie avant du téléphone ou des éléments qui le constituent est celle que voit l'utilisateur lorsqu'il regarde l'écran du téléphone mobile.

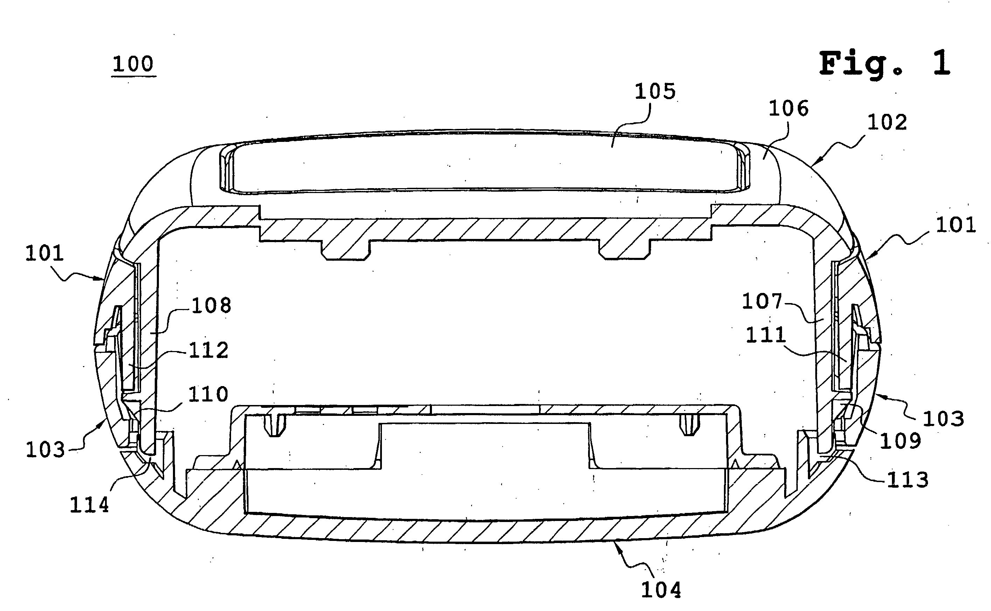

La figure 1 montre un téléphone mobile 100 comportant une coque 101 supérieure. La coque 101 supérieure comporte un emplacement qui est occupé par une vitre 102. Ces éléments représentés sur la figure 1 sont vus selon une coupe transversale du téléphone 100 au niveau d'un dispositif de fixation de la vitre 102 sur la coque 101 supérieure.

La figure 1 montre aussi une coque 103 inférieure et un capot 104 de batterie. Lorsque les éléments 101 à 104 sont assemblés, ils constituent le boîtier du téléphone 100 mobile.

Sur la figure 1 la vitre 102 est composée de deux éléments. La vitre 102 comporte un carreau 105 et un plastron 106. La vitre 105 est alors soudée sur le plastron 106. A travers la vitre 105, l'utilisateur du téléphone mobile 100 peut voir un écran de son téléphone mobile. La vitre 102 comporte aussi deux languettes 107 et 108. Les languettes 107 et 108 sont situées sur les bords latéraux de la vitre 102. Il s'agit d'excroissances de faible épaisseur qui sont perpendiculaires au plan du carreau 105. Lorsque le boîtier du téléphone mobile est monté, les languettes 107 et 108 de la vitre 102 sont à l'intérieur de ce boîtier. La longueur des languettes 107 et 108 est suffisante pour que lorsque le capot 104 de la batterie est enlevée du boîtier du téléphone 100, un utilisateur puisse atteindre l'extrémité des languettes 107 et 108 situées à l'opposé du carreau 105.

Les languettes 107 et 108 comportent des ergots 109 et 110. Les ergots 109 et 110 sont situés aux extrémités des languettes 107 et 108 qui sont opposées au carreau 105. Les ergots sont positionnés sur les faces des languettes qui sont orientées vers l'extérieur du boîtier du téléphone 100. Ce positionnement est intéressant car il facilite l'extraction de la vitre 102 du boîtier du téléphone 100. En effet pour dégager la vitre 102 il suffit alors de pincer les deux languettes 107 et 108 pour dégager les ergots.

La coque 101 supérieure comporte des éléments 111 et 112 situés en vis à vis des languettes respectivement 107 et 108. Lorsque la vitre 102 est en place sur la coque 101, les éléments 111 et 112 accrochent les ergots respectivement 109 et 110.

On note que les ergots 109 et 110 sont biseautés, les ergots se situant vers le bas du téléphone mobile. Cela est utile pour l'introduction de la vitre 102 dans son emplacement sur la coque 101. En effet ces biseaux permettent d'avoir à simplement appuyer sur la vitre 102 pour l'introduire dans son emplacement. Ces biseaux évitent que lors de l'introduction de la vitre dans son emplacement, les ergots 109 et 110 accrochent sur les éléments 111 et 112. Lors de l'introduction de la vitre 102 dans la coque 101, les languettes 107 et 108 sont donc déformées, elles reprennent leur forme d'origine lorsque la vitre est complètement enfoncée dans son emplacement les ergots 109 et 110 sont alors accrochés aux éléments 111 et 112.

La figure 1 montre que sur la coque 103 inférieure est fixée un capot 104 de batterie. Ce capot comporte un dispositif anti-recul composé de deux puits respectivement 113 et 114. Lorsque la vitre 102 est en place sur le boîtier du téléphone 100, l'extrémité de la languette 109 vient se loger dans le puits 113 et l'extrémité de la languette 108 vient se loger dans le puits 114. Il n'est ainsi plus possible aux languettes 107 et 108 de se déformer suffisamment pour permettre aux ergots 109 et 110 de se décrocher des éléments 111 respectivement 112. En effet au cours d'une déformation qui surviendrait, à la suite d'un choc par exemple, la déformation des languettes serait limitée par les parois des puits 113 et 114. Une fois que la batterie est placée sur le téléphone mobile 100, la vitre 102 est donc verrouillée.

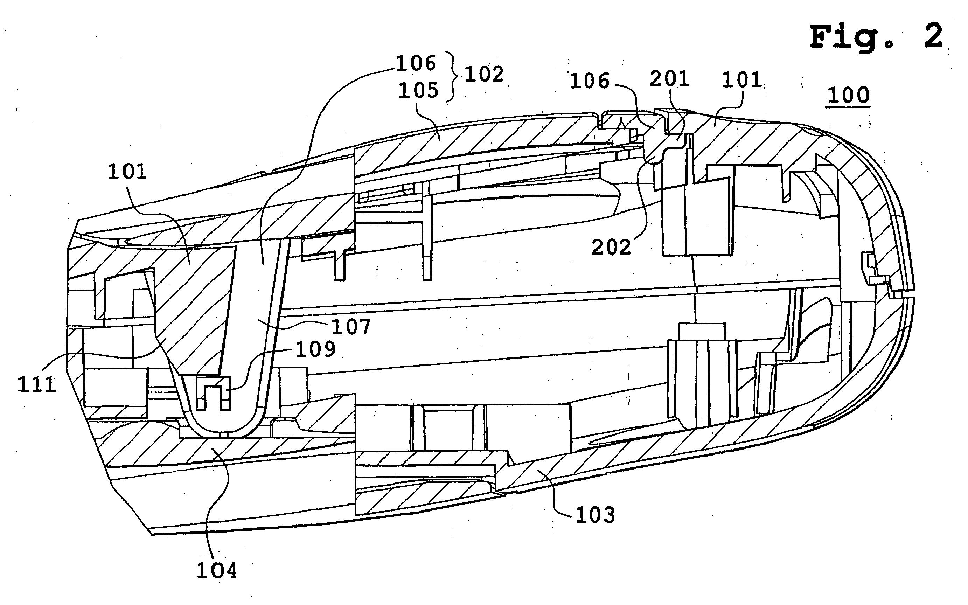

La figure 2 montre une vue latérale d'un téléphone mobile selon l'invention. La figure 1 montre une coque 101 supérieure, la vitre 102 comportant un plastron 106 et une vitre 105. La figure 2 montre aussi la coque inférieure 103 et le capot 104 de batterie.

La vitre 102 comporte dans sa partie supérieure un ergot 201 qui vient se loger sous la coque 101. La vitre 102 comporte aussi un levier 202 qui prend appui dans des éléments contenus dans le téléphone 100, mais non représentés sur la figure 2, et permet lorsque l'on met en place la vitre 102 d'appuyer l'ergot 201 contre la coque 101. L'ensemble 201-202 contribue donc au maintien en place de la vitre 102.

La figure 2 montre aussi que la languette 107 est suffisamment large pour accueillir l'ergot 109, et ne pas subir de déformation dans une direction matérialisée par une droite qui irait du haut du téléphone vers le bas du téléphone.

L'ergot 109 est évidé dans sa partie centrale afin de réaliser une économie de matière, tout en le conservant suffisamment large pour assurer sa robustesse et une bonne accroche sur l'élément 111. Ainsi l'ergot 109 est constitué d'un parallélépipède dont le plus grand coté serre de buté sur l'élément 111, et de deux triangles rectangles situés en dessous et de chaque coté du parallélépipède. Ces triangles renforce le parallélépipède et facilite l'insertion de la vitre 102 dans son emplacement.

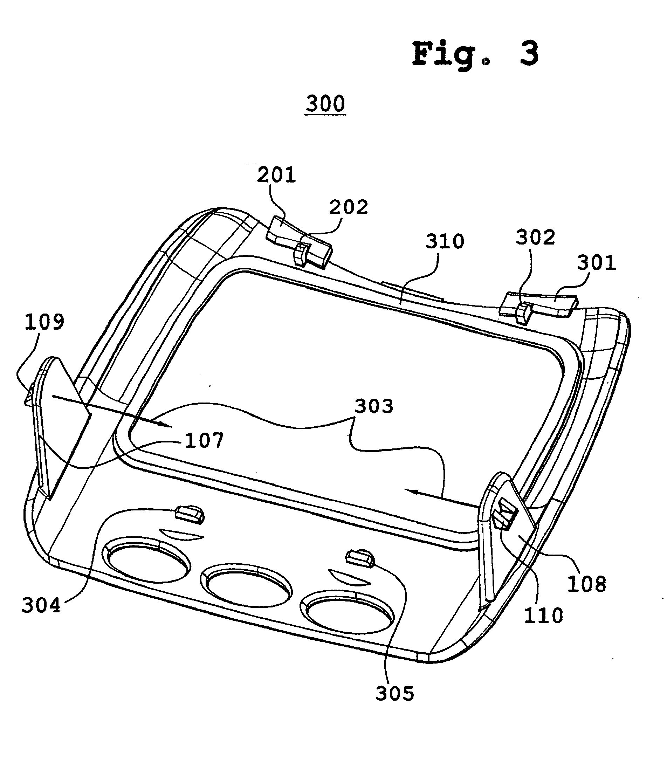

La figure 3 montre une vitre 300 pour un téléphone selon l'invention. La vitre 300 comporte des ergots 201 et 301, ainsi que des leviers 202 et 302. Lors de la mise en place de la vitre sur un téléphone selon l'invention, un utilisateur position les ergots 201 et 301 dans les emplacements prévus à cet effet sur une coque supérieure du téléphone. Alors l'utilisateur place les languettes 107 et 108 dans les emplacements prévus à cet effet dans la coque supérieure du téléphone et appuie sur la face avant de la vitre 300. Les leviers 202 et 302 vont alors prendre appui sur les éléments contenus dans le téléphone mobile ce qui va plaquer les ergots 201 et 301 contre la coque du téléphone. Lors de l'introduction de la vitre dans son emplacement les languettes 107 et 108 vont se déformer vers l'intérieur suivant une direction 303.

La figure 3 montre aussi des guides 304 et 305. Les guides 304 et 305 sont situés sur la face arrière de la vitre 300. Ces guides ont une forme conique afin de faciliter leur introduction dans des emplacements prévus à cet effet sur la face avant de la coque supérieure du téléphoné. De plus cette forme conique va faciliter et améliorer le maintien de la vitre une fois celle-ci mise en place.

Une fois que la vitre 300 est en place les languettes 107 et 108 reprennent leur forme initiale et les ergots 109 et 110 sont alors accrochés à des éléments de la coque supérieure. Dans la pratique la mise en place de la vitre ne peut se faire que si la batterie n'est pas accrochée au téléphone. En effet, si on considère la figure 1, et qu'on essaie d'introduire la vitre 102 dans son emplacement sur la coque 101 alors que le capot 104 est accroché à la coque 103 on se heurte à un problème. Lors de l'introduction de la vitre 102, l'élément 111 va repousser l'ergot 109 ce qui a pour effet de déformer la languette 107. Arrivée à un certain point l'extrémité de la languette 107 se heurte aux parois du puits 113, ce qui interrompt l'introduction de la vitre avant qu'elle soit accrochée. Pour pouvoir poursuivre l'introduction, il faut décrocher le capot 104.

De même pour décrocher la vitre 300 de la coque 101, il faut préalablement décrocher le capot 104 de la coque 103. Ainsi on accède aux languettes 107 et 108 que l'on pince afin de dégager les ergots 109 et 110 des éléments 111 et 112. Puis on pousse, de l'arrière du téléphone vers l'avant, pour dégager la vitre de son emplacement.

Le boîtier décrit comporte deux coques, une supérieure et une inférieure, car il s'agit d'un mode de réalisation pratique pour la mise en place des éléments internes du téléphone. Cependant l'invention reste valable avec un boîtier différent. Il suffit que les languettes décrites pour la vitre interchangeable soient accessibles par l'arrière du téléphone, et verrouillées par un élément amovible de ce téléphone, dans notre exemple préféré une batterie.

Le fait de placer les ergots 109 et 110 sur les faces des languettes 107 et 108 qui sont orientées vers l'extérieure du boîtier du téléphone 100 est justifié par le fait qu'il est plus simple de pincer que d'écarter. Cependant toutes les combinaisons de placement sont possibles pour les ergots sur les différentes faces des languettes 107 et 108, à condition d'adapter les positions des éléments 111 et 112, et des puits 113 et 114.

La vitre 300 comporte aussi un joint 310 situé sur sa face intérieure et qui enserre un écran du téléphone mobile. Ce joint assure l'étanchéité du téléphone mobile contre les poussières qui existent dans le milieu d'utilisation du téléphone. L'élasticité de ce joint permet aussi de mieux plaquer les ergots 109 et 110 contre les éléments auxquels ils sont accrochés, et donc d'améliorer le maintien de la vitre 300.

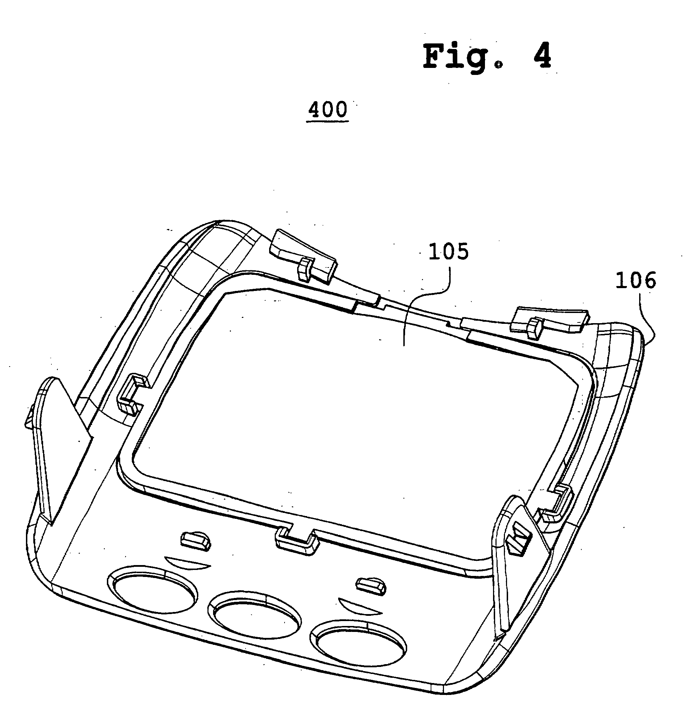

La figure 4 montre une vitre 400 qui comporte les mêmes éléments que la vitre 300. La différence est que la vitre 400 est réalisée en deux éléments. La figure 4 montre un carreau 105 et un plastron 106. Ce mode de réalisation permet de réaliser le plastron et le carreau en deux matériaux différents, donc d'obtenir une vitre à moindre coût mais ayant un moins bon rendu. Dans ce cas le carreau 105 est soudé au plastron 106, par ultrasons par exemple.

Dans la pratique la vitre est de dimensions supérieures à l'écran qu'elle protège. Il est donc possible de personnaliser les parties de la vitre qui n'ont pas besoin d'être transparente, c'est à dire qui ne sont pas en regard de la vitre, en les sérigraphiant par exemple.

## Revendications

1. Téléphone (100) mobile comportant un boîtier muni d'une coque (101) supérieure:
- la coque supérieure comporte un emplacement pour recevoir une vitre (102) amovible interchangeable par un utilisateur du téléphone,
téléphone mobile **caractérisé en ce que** :
- la vitre comporte deux languettes (107, 108) orthogonales à une surface (105) transparente de cette vitre et situées sur les côtés latéraux de cette vitre, au travers de laquelle on regarde un écran du téléphone mobile, la longueur des languettes étant suffisante pour que l'on puisse accéder à des extrémités de ces languettes par le dos du téléphone une fois que la coque et la vitre sont assemblées,
- les languettes comportent des ergots (109, 110) s'accrochant sur un élément (111, 112) de la coque supérieure.

2. Téléphone selon la revendication 1, **caractérisé en ce que** chaque languette comporte un ergot (109, 110) qui s'accroche à un élément (111, 112) de la coque supérieure et solidarise ainsi la vitre à la coque supérieure, l'ergot étant latéral à la vitre placé à l'extérieure de la languette.

3. Téléphone selon l'une des revendications 1 ou 2, **caractérisé en ce que** chaque languette est suffisamment souple pour permettre de décrocher la vitre de la coque supérieure sans se rompre.

4. Téléphone selon l'une des revendications 1 à 3, **caractérisé en ce qu'**il comporte une coque (103) inférieure munie d'un dispositif de fixation pour une batterie, un capot (104) de cette batterie comportant un dispositif (113) anti-recul de la languette.

5. Téléphone selon l'une des revendications 1 à 6, **caractérisé en ce que** la vitre comporte un ergot (201) qui se loge sous la coque supérieure, cet ergot possède un levier (202) qui prend appuie sur des éléments contenus dans le téléphone une fois assemblé pour repousser la vitre contre la coque supérieure.

6. Téléphone selon l'une des revendications 1 à 5, **caractérisé en ce que** la vitre comporte, sur une face arrière ou avant, un joint (304) élastique pour assurer une étanchéité entre la coque supérieure du téléphone et la vitre.

7. Téléphone selon l'une des revendications 1 à 6, **caractérisé en ce que** la vitre comporte un guide (304) excroissant qui vient se loger dans un orifice de butée du téléphone pour permettre un positionnement aisé et correct de la vitre.

8. Téléphone selon l'une des revendications 1 à 7, **caractérisé en ce que** la vitre amovible comporte un plastron (106) et un carreau (105) transparent fixé à ce plastron.

## Patentansprüche

1. Mobiltelefon (100) mit einem Gehäuse mit einer Oberschale (101), wobei
- die Oberschale einen Platz zur Aufnahme einer beweglichen und durch den Nutzer austauschbaren Fensterscheibe (102) aufweist,
und das **dadurch gekennzeichnet ist, dass**:
- die Scheibe zwei zu einer durchsichtigen Oberfläche (105) der Scheibe orthogonale Laschen (107, 108) umfasst, die seitlich an der Scheibe angeordnet sind, wobei man durch die Scheibe einen Bildschirm des Mobiltelefons betrachtet, und wobei die Länge der Laschen ausreichend ist, um deren Enden von der Rückseite des Telefons erreichen zu können, wenn die Scheibe und die Schale montiert sind, und
- die Laschen Sporne (109, 110) umfassen, die sich an ein Element (111, 112) der Außenschale klammern.

2. Mobiltelefon nach Anspruch 1, **dadurch gekennzeichnet, dass** jede Lasche einen Sporn (109, 110) umfasst, der sich an ein Element (111, 112) der Außenschale klammert und so die Fensterscheibe an der Außenschale befestigt, wobei der Sporn seitlich von der Scheibe außerhalb der Lasche angeordnet ist.

3. Mobiltelefon nach Anspruch 1 oder 2, **dadurch gekennzeichnet, dass** jede Lasche ausreichend biegsam ist, um es zu ermöglichen, die Scheibe von der Außenschale abzunehmen, ohne zu brechen.

4. Mobiltelefon nach einem der Ansprüche 1 bis 3, **dadurch gekennzeichnet, dass** das Telefon eine Unterschale (103) umfasst, die eine Batteriehalterung aufweist; wobei ein Deckel (104) der Batterie eine Einrichtung (113) umfasst, die ein Zurückziehen der Lasche verhindert.

5. Mobiltelefon nach einem der Ansprüche 1 bis 4, **dadurch gekennzeichnet, dass** die Scheibe einen Dorn (201) umfasst, der unter die Oberschale greift und einen Hebel (202) aufweist, der sich in montiertem Zustand auf Elementen des Telefons abstützt, um die Scheibe gegen die Oberschale zu drücken.

6. Mobiltelefon nach einem der Ansprüche 1 bis 5, **dadurch gekennzeichnet, dass** die Scheibe auf der Rück- oder Vorderseite eine elastische Dichtung (310) aufweist, um die Dichtigkeit zwischen Oberschale des Telefons und der Scheibe sicherzustellen.

7. Mobiltelefon nach einem der Ansprüche 1 bis 6, **dadurch gekennzeichnet, dass** die Scheibe eine sich nach außen erstreckende Führung (304) umfasst, die in eine Öffnung am einen Ende des Telefons eingreift, um eine leichte und korrekte Positionierung der Scheibe zu ermöglichen.

8. Mobiltelefon nach einem der Ansprüche 1 bis 7, **dadurch gekennzeichnet, dass** die bewegliche Fensterscheibe einen Einsatz (106) und eine durchsichtige Platte (105) umfasst, die im Einsatz befestigt ist.

## Claims

1. Mobile telephone (100) including a case provided with an upper shell (101):
- the upper shell includes a location to receive a removable glazing (102) which is interchangeable by a user of the telephone,
which mobile telephone is ***characterised by** the fact that*:
- the glazing includes two tabs (107, 108) at right angles to a transparent surface (105) of this glazing and situated on the lateral sides of this glazing, through which a screen of the mobile telephone is viewed, the length of the tabs being sufficient for ends of these tabs to be able to be accessed through the back of the telephone once the shell and the glazing are assembled,
- the tabs include lugs (109, 110) hooking onto an element (111, 112) of the upper shell.

2. Telephone as described in claim 1, ***characterised by** the fact that* each tab includes a lug (109, 110) which hooks onto an element (111, 112) of the upper shell and thus firmly attaches the glazing to the upper shell, the lug being lateral to the glazing and placed on the outside of the tab.

3. Telephone as described in one of claims 1 or 2, ***characterised by** the fact that* each tab is sufficiently flexible to allow the glazing to be detached from the upper shell without breaking.

4. Telephone as described in one of claims 1 to 3, ***characterised by** the fact that* it includes a lower shell (103) provided with a fixing device for a battery, a cover (104) of this battery including a device (113) preventing withdrawal of the tab.

5. Telephone as described in one of claims 1 to 6, ***characterised by** the fact that* the glazing includes a lug (201) which is housed under the upper shell and this lug has a lever (202) which bears on elements contained in the telephone once assembled to push the glazing against the upper shell.

6. Telephone as described in one of claims 1 to 5, ***characterised by** the fact that* the glazing includes, on a back or front face, an elastic seal (304) to ensure tightness between the upper shell of the telephone and the glazing.

7. Telephone as described in one of claims 1 to 6, ***characterised by** the fact that* the glazing includes a protruding guide (304) which enters a stop orifice of the telephone to permit easy and correct positioning of the glazing.

8. Telephone as described in one of claims 1 to 7, ***characterised by** the fact that* the removable glazing includes a plate (106) and a transparent pane (105) fixed to this plate.
